(19) Europäisches Patentamt / European Patent Office / Office européen des brevets

(11) **EP 3 275 911 B1**

(12) **EUROPEAN PATENT SPECIFICATION**

(45) Date of publication and mention of the grant of the patent:
**02.07.2025 Bulletin 2025/27**

(21) Application number: **16768964.5**

(22) Date of filing: **25.03.2016**

(51) International Patent Classification (IPC):
*C08G 18/38* (2006.01)   *C08G 18/72* (2006.01)
*G02B 1/04* (2006.01)   *G02C 7/00* (2006.01)
*C08G 18/75* (2006.01)   *C08G 18/24* (2006.01)
*C08G 18/73* (2006.01)

(52) Cooperative Patent Classification (CPC):
C08G 18/3876; C08G 18/242; C08G 18/3865;
C08G 18/722; C08G 18/73; C08G 18/755;
C08G 18/758; G02B 1/04

(86) International application number:
**PCT/JP2016/059748**

(87) International publication number:
**WO 2016/153061 (29.09.2016 Gazette 2016/39)**

(54) **POLYMERIZABLE COMPOSITION, OPTICAL MEMBER, PLASTIC LENS, AND EYEGLASS LENS**

POLYMERISIERBARE ZUSAMMENSETZUNG, OPTISCHES ELEMENT, KUNSTSTOFFLINSE UND BRILLENLINSE

COMPOSITION POLYMÉRISABLE, ÉLÉMENT OPTIQUE, LENTILLE EN PLASTIQUE ET VERRE DE LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2015 JP 2015062740**

(43) Date of publication of application:
**31.01.2018 Bulletin 2018/05**

(73) Proprietor: **Hoya Lens Thailand Ltd.**
**Pathumthani 12130 (TH)**

(72) Inventor: **IIJIMA, Takayuki**
**Tokyo 160-8347 (JP)**

(74) Representative: **Hoffmann Eitle**
**Patent- und Rechtsanwälte PartmbB**
**Arabellastraße 30**
**81925 München (DE)**

(56) References cited:
EP-A1- 2 497 791      EP-A1- 3 081 965
EP-A1- 3 178 859      WO-A1-2013/024863
WO-A1-2013/032010    WO-A1-2015/088015
WO-A1-2016/021680    JP-A- 2008 255 221
JP-A- 2012 181 268    JP-A- H07 247 335
US-A1- 2014 327 869

**Description**

Technical Field

The present invention relates to a polymerizable composition containing a polyisocyanate compound and a polythiol compound, an optical component obtained from the polymerizable composition, a plastic lens containing the optical component, and a spectacle lens including a lens substrate including the optical component.

Background Art

It is known that a plastic lens with high refractive index can be obtained by reacting a polyisocyanate compound with a polythiol compound (see e.g. JP-A-1995-252207). In JP-A-1995-252207, a sulfur-containing urethane-based resin lens which is obtained by heating and curing a composition containing tetrathiol and at least one ester compound selected from a polyisocyanate compound, a polyisothiocyanate compound, and an isothiocyanate compound having an isocyanate group is disclosed. It is described that the lens is colorless and transparent and has a physical property of excellent heat resistance due to high refractive index and low dispersion and also excellent productivity.

EP-A-3 178 859 (WO 2016/021680) discloses a polymerizable composition comprising (A) at least one isocyanate compound selected from di(isocyanatomethyl)-norbornane, -cyclohexane and -benzene, (B) a $C_{4-11}$-aliphatic isocyanate compound; and (C) a thiol compound (C) which preferably is selected from specified compounds having 2-4 SH groups and 2-4 -S- bridges.

EP-A-3 081 965 (WO 2015/088015) relates to a polymerizable composition comprising (A) a polythiol comprising a mixture of 5,7-, 4,7- and 4,8-dimercaptomethyl-1,11-dimercapto-3,6,9-trithiaundecane; (B) a polyisocyanate selected from m-XDI, HMDI, isophorone diisocyanate and a mixture of 2,5- and 2,6-bis(isocyanatomethyl)-bicyclo[2.2.1]heptane; and (C) 0.1-1.5 wt.% of 2-(2-hydroxy-3-t-butyl-5-methylphenyl)-chlorobenzotriazole as a UV-absorber.

JP-A-2008-255221 provides an internal release agent for optical materials made from polythiourethane resins, the release agent comprising (A) 30-99 wt.% of specified phosphoric acid monoesters (1) and (B) 70-1 wt.% of specified phosphoric acid diesters (2).

EP-A_2 497 791 describes polythiourethane-based polymerizable composition comprising 0.05-0.4 pbw of a specified internal mold release agent, wherein the iso(thio)cyanates preferably are selected from m-XDI, m-PDI, 2,4- and 2, 6-tTDI, 2,5- and 2,6-bis(isocyanatomethyl)-bicyclo[2.2.1]-heptane, 1,3- and 1,4-bis(isocyanatomethyl)cyclohexane, and HMDI; and the active hydrogen compounds are preferably selected from specified compounds having 2-4 SH groups and optionally 2-3 -S- bridges.

US-A-2014/327869 discloses a polymerizable composition comprising (A) at least one bi- or higher functional alicyclic polyisocyanate compound, (B) at least one polythiol of a general formula (1), (C) at least one thiol compound of a general formula (3) containing at least two SH groups and at least a -S- bridge, and (D) a specified polymerization catalyst.

Summary of Invention

Technical Problem

However, the lens disclosed in JP-A-1995-252207 is problematic in that, as a cross-linked structure is formed at low temperature in order to use tetrathiol, viscosity increase is fast during the polymerization and striae are easily generated compared to other urethane resin-based plastic lenses.

Thus, an object of one example of the present invention is to provide a polymerizable composition allowing obtainment of an optical component with reduced striae, an optical component obtained from the polymerizable composition, a plastic lens containing the optical component, and a spectacle lens provided with a lens substrate formed of the optical component.

Furthermore, an object of one example of the present invention is to provide a polymerizable composition allowing obtainment of an optical component with excellent tensile strength, an optical component obtained from the polymerizable composition, a plastic lens containing the optical component, and a spectacle lens including a lens substrate including the optical component.

Solution to Problem

To solve the problems described above, the inventors of the present invention conducted intensive studies. As a result, it was found that, by using a polymerizable composition which contains an isocyanate component containing pre-determined alicyclic polyisocyanate and pre-determined non-cyclic aliphatic polyisocyanate and a polythiol component containing pre-determined polythiol, the above problems can be solved, and the present invention is completed accordingly.

Thus, the present invention provides a polymerizable composition (also referred to as "the present composition" herein) comprising an isocyanate component comprising alicyclic polyisocyanate (A-1)and non-cyclic aliphatic polyisocyanate (A-2); and a polythiol component comprising polythiol (B-1) and polythiol (B-2); wherein

- the alicyclic polyisocyanate (A-1) is at least one of isophorone diisocyanate, methylene biscyclohexyl diisocyanate, bis(isocyanatemethyl)cyclohexane, and bis(isocyanatemethyl)bicyclo[2.2.1]heptane,

- the non-cyclic aliphatic polyisocyanate (A-2) is at least one of hexamethylene diisocyanate and trimethylhexamethylene diisocyanate,

- the polythiol (B-1) is at least one of 4,8-, 4,7- and 5,7-bis(mercaptomethyl)-3,6,9-trithiaundecane-1,11-dithiol, and,

- the polythiol (B-2) is at least one of trimethylol propane tris(thioglycolate), trimethylol propane tris(3-mercaptopropionate), 1,4-butanediol bis(thioglycolate), and 1,4-butanediol bis(3-mercaptopropionate).

Furthermore, the invention provides (i) an optical component obtained by polymerizing the present composition, (ii) a plastic lens comprising said optical component and (iii) a spectacle lens comprising alens substrate which comprises said optical component.

Preferred embodiments of the invention are as defined in the appended dependent claims and/or in the following detailed description.

Advantageous Effects of Invention

According to the present invention, a polymerizable composition ("the present composition") allowing obtainment of an optical component with reduced striae, an optical component obtained from the polymerizable composition, a plastic lens containing the optical component, and a spectacle lens including a lens substrate including the optical component can be provided.

Also, according to the present invention, a polymerizable composition allowing obtainment of an optical component with excellent tensile strength, an optical component obtained from the polymerizable composition, a plastic lens containing the optical component, and a spectacle lens including a lens substrate including the optical component can be provided.

Description of Embodiments

[Polymerizable composition]

The present composition contains a specified isocyanate component which contains alicyclic polyisocyanate (A-1) having two isocyanate groups and non-cyclic aliphatic polyisocyanate (A-2) having two isocyanate groups, and a specified polythiol component which contains polythiol (B-1) having four mercapto groups and three sulfide bonds and polythiol (B-2) having two or three mercapto groups and two or three ester bonds.

<Isocyanate component>

The isocyanate component of the present composition contains the alicyclic polyisocyanate (A-1) having two isocyanate groups and the non-cyclic aliphatic polyisocyanate (A-2) having two isocyanate groups.

(Alicyclic polyisocyanate (A-1))

The alicyclic polyisocyanate (A-1) is at least one of isophorone diisocyanate, methylene biscyclohexyl diisocyanate, bis(isocyanatemethyl)cyclohexane, bis(isocyanatemethyl)bicyclo[2.2.1]heptane. These alicyclic polyisocyanates may be used either singly or in combinations or two or more types.

These alicyclic polyisocyanates (A-1) are suitable from the viewpoint of obtaining an optical component with reduced striae. . From the viewpoint of improving further the tensile strength of an optical component which is produced by using the polymerizable composition, it is preferably at least one selected from isophorone diisocyanate, and bis(isocyanatemethyl)bicyclo[2.2.1]heptane.

(Non-cyclic aliphatic polyisocyanate (A-2))

The non-cyclic aliphatic polyisocyanate (A-2) is at least one of hexamethylene diisocyanate and trimethylhexamethylene diisocyanate. These polyisocyanates may be used either singly or in combinations or two or more types. They are suitable from the viewpoint of obtaining an optical component with reduced striae, and also from the viewpoint of improving the tensile strength of an optical component which is produced by using the polymerizable composition.

(Other polyisocyanate)

The isocyanate component of the present composition may contain, within a range in which the effect of the present invention is not impaired, polyisocyanate other than the alicyclic polyisocyanate (A-1) and the non-cyclic aliphatic polyisocyanate (A-2), if necessary.

(Ratio of total of the alicyclic polyisocyanate (A-1) and the non-cyclic aliphatic polyisocyanate (A-2))

The ratio of the total of the alicyclic polyisocyanate (A-1) and the non-cyclic aliphaticpolyisocyanate (A-2) in the isocyanate component of the present composition is, relative to the total mass of the isocyanate component, preferably $\geq$ 80 mass%, more preferably $\geq$ 90 mass%, even more preferably $\geq$ 95 mass%, and $\leq$ 100 mass%. As the ratio of the total of the alicyclic polyisocyanate (A-1) and the non-cyclic aliphatic polyisocyanate (A-2) is $\geq$ 80 mass%, the effect of suppressing striae of an optical component to be obtained can be further enhanced. Furthermore, it is also possible to improve the tensile strength of an optical component which is produced by using the present composition.

(Molar ratio [(A-1)/(A-2)])

The molar ratio [(A-1)/(A-2)] between the alicyclic polyisocyanate (A-1) and the non-cyclic aliphatic polyisocyanate (A-2) is, from the viewpoint of further improving the effect of suppressing striae of an optical component to be obtained, preferably (95/5) - (50/50), more preferably (90/10) - ((50/50), and even more preferably (90/10) - (60/40). As the molar ratio is within the above range, the tensile strength of an optical component which is produced by using the present composition can be improved.

<Polythiol component>

The polythiol component of the present composition contains the polythiol (B-1) having four mercapto groups and three sulfide bonds and the polythiol (B-2) having two or three mercapto groups and two or three ester bonds.

(Polythiol (B-1))

The polythiol (B-1) has four mercapto groups and three sulfide bonds, and is at least one of 4,8-, 4,7- and 5,7-bis(mercaptomethyl)- 3,6,9-trithiaundecane-1,11-dithiol. The polythiols (B-1) may be used either singly or in combinations or two or more types.
From the viewpoint of obtaining an optical component with high refractive index, heat resistance, and tensile strength, the polythiol (B-1) is preferably a mixture of 4,8-, 4,7- and 5,7-bis(mercaptomethyl)-3,6,9-trithiaundecane-1,11-dithiol.

(Polythiol (B-2))

The polythiol (B-2) is at least one of trimethylol propane tris(thioglycolate), trimethylol propane tris(3-mercaptopropionate), 1,4-butanediol bis(thioglycolate) and 1,4-butanediol bis (3-mercaptopropionate). These polythiols may be used either singly or in combinations or two or more types.
The above polythiols (B-2) are suitable from the viewpoint of obtaining an optical component with reduced striae, and also from the viewpoint of improving further the tensile strength of an optical component which is produced by using the polymerizable composition.
It is preferable that the polythiol (B-2) has three mercapto groups. Accordingly, the heat resistance and tensile strength of an optical component which is produced by using the polymerizable composition of the present invention can be improved. In that case, the polythiol (B-2) is at least one of trimethylol propane tris(thioglycolate) and trimethylol propane tris(3-mercaptopropionate).

(Other polythiol)

The polythiol component of the present composition may contain, within a range in which the effect of the present invention is not impaired, polythiol other than the polythiol (B-1) and the polythiol (B-2), if necessary.

From the viewpoint of obtaining an optical component with further reduced striae, the polymerizable composition which is more preferred among the polymerizable compositions of the present invention is as follows:

(1) combination of a mixture of isophorone diisocyanate and hexamethylene diisocyanate as an isocyanate component, and 4,8-, 4,7- and

5,7-bis(mercaptomethyl)-3,6,9-trithiaundecane-1,11-dithiol as a polythiol component with trimethylol propane tris(thioglycolate),

(2) combination of a mixture of isophorone diisocyanate and trimethylhexamethylene diisocyanate as an isocyanate component and 4,8-, 4,7- and

5,7-bis(mercaptomethyl)-3,6,9-trithiaundecane-1,11-dithiol as a polythiol component with trimethylol propane tris(thioglycolate), and

(3) combination of a mixture of dicyclohexylmethane diisocyanate andhexamethylene diisocyanate as an isocyanate component and 4,8-, 4,7- and

5,7-bis(mercaptomethyl)-3,6,9-trithiaundecane-1,11-dithiol as a polythiol component with trimethylol propane tris(thioglycolate).

(Ratio of total of the polythiol (B-1) and the polythiol (B-2))

The ratio of the total of the polythiol (B-1) and the polythiol (B-2) in the polythiol component of the present composition is, relative to the total mass of the polythiol component, preferably $\geq 70$ mass%, more preferably $\geq 80$ mass%, even more preferably $\geq 90$ mass%, and $\leq 100$ mass%. As the ratio of the total of the polythiol (B-1) and the polythiol (B-2) is $\geq 70$ mass%, the effect of suppressing striae of an optical component to be obtained can be further enhanced. Furthermore, it is also possible to improve the tensile strength of an optical component which is produced by using the polymerizable composition of the present invention.

(Molar ratio [(B-1)/(B-2)])

The molar ratio [(B-1)/(B-2)] between the polythiol (B-1) and the polythiol (B-2) is, from the viewpoint of further enhancing the effect of suppressing the striae of an optical component to be obtained, preferably (90/10)-(50/50), more preferably (90/10)-(60/40), and even more preferably (85/15)-(65/35). As the molar ratio [(B-1)/(B-2)] is within the above range, the tensile strength of an optical component which is produced by using the polymerizable composition can be improved.

<Use ratio>

The ratio between the polythiol component and the polyisocyanate component is, in terms of the functional group molar ratio between SH group and/NCO group, preferably within a range of 0.3-2.0, more preferably 0.7-1.5, even more preferably 0.7-1.2, and even more preferably 0.8-1.1.

<Other component>

It is also possible that the present composition consists of the above isocyanate component and the above polythiol component only. The content of the total of the isocyanate component and the polythiol component is preferably $\geq$ 80 mass%, more preferably $\geq 90$ mass%, even more preferably $\geq 95$ mass%, and even more preferably $\geq 98$ mass% and $\leq$ 100 mass% in the polymerizable composition.

However, the present composition may contain, within a range in which the effect of the present invention is not impaired, a component which is different from the components of the above isocyanate component and the above polythiol component. Examples of such component include a compound which is copolymerizable with the above isocyanate component and the above polythiol component, an active hydrogen compound represented by amine, an epoxy compound, an olefin compound, a carbonate compound, an ester compound, a metal, a metal oxide, an organometallic compound, and an inorganic material. They may be used either singly or in combination of two or more types.

Furthermore, for control to desired reaction rate, a known reaction catalyst used for production of polythiourethane may be suitably added to the present composition. Examples of the reaction catalyst include organic tin like dimethyltindichloride. The blending amount of the reaction catalyst is, relative to the total amount of 100 parts by mass (pbm) of the isocyanate component and polythiol component, preferably 0.01-1 pbm, more preferably 0.05-0.5 pbm, and even more preferably 0.08-0.3 pbm.

A releasing agent may be also added. Examples of the releasing agent include a phosphoric acid-based releasing agent such as butoxy ethyl acid phosphate or dibutoxyethyl acid phosphate. The blending amount of the releasing agent is, relative to the total amount of 100 pbm of the isocyanate component and polythiol component, preferably 0.01-1 pbm, more preferably 0.1-0.5 pbm, and even more preferably 0.2-0.3 pbm.

Furthermore, depending on purpose, various materials including a chain extending agent, a cross-linking agent, a photostabilizer, a UV absorbing agent, an anti-oxidizing agent, an oil-soluble dye, a filler, a releasing agent, and a blueing agent may be added to the present composition.

[Optical component]

The optical component of the present invention ("the present optical component") is obtained by polymerizing the present composition. The present optical component may be produced as described below, for example.

The method for producing an optical component includes a step of carrying out cast polymerization of the polymerizable composition. For example, the present composition is degassed, if necessary, and injected thereafter to a molding die. Then, the polymerizable composition injected to a molding die is polymerized. As for the molding die, a molding die consisting of a pair of glass mold or metal mold and a tape- or resin-based gasket is used. The polymerization time for polymerizing the polymerizable resin in a molding die is 3-96 hours, for example. The polymerization temperature is 0-130°C, for example. To have a favorable release property of a transparent resin, which is prepared by polymerizing the polymerizable composition, from a molding die, it is also possible that a releasing agent is applied on releasing surface of a molding die or a releasing agent is added to the polymerizable composition. The optical component to be obtained accordingly has reduced striae, high index, lowdispersion, and low specific gravity. The optical component to be obtained also has excellent tensile strength. For such reasons, the present optical component is suitably used as an optical component of an optical device such as a spectacle lens or a camera lens.

[Plastic lens]

The plastic lens of the present invention ("the present plastic lens") includes the present optical component, and is more preferably a lens including a lens substrate including the present optical component. The present plastic lens exhibits the effect of having reduced striae, high index, low dispersion, and low specific gravity. Furthermore, the present plastic lens has excellent tensile strength. The present plastic lens may consist of the present optical component only, or it may contain other optical component.

If necessary, an anti-reflection treatment or a surface polishing and dyeing treatment for having a fashion property or the like can be carried out for the present optical component. To have high hardness, improved abrasion resistance, improved chemical resistance, and an anti-fogging property, the spectacle lens may have at least one selected from an anti-static layer, a hard coating layer, an anti-reflection layer, and a light illuminating layer on top of the lens substrate consisting of the present optical component.

Examples

Hereinbelow, the present invention is further specifically explained by way of Examples.

For the plastic lenses of Examples and Comparative Examples, refractive index, Abbe number, heat resistance, striae, transparency, optical distortion, and tensile strength were evaluated.

(Refractive index and Abbe number)

By using precision refractometer KPR-2000 which is manufactured by Kalnew Optical Industrial Co., Ltd., the refractive index of plastic lens was measured at 20° for the light with wavelength of F' ray (488.0nm), C' ray (643.9 nm), and e ray (546.1 nm). Then, by using the following formula, Abbe number was calculated.

$$\text{Abbe number } \nu_e = (n_e - 1)/(n_{F'} - n_{C'})$$

$n_e$ represents the refractive index when measurement is made with a wavelength of e ray, $n_{F'}$ represents the refractive index when measurement is made with a wavelength of F' ray, and $n_{C'}$ represents the refractive index when measurement is made with a wavelength of C' ray.

(Heat resistance)

According to a penetration method using TAS100TMAwhich is manufactured by Rigaku Corporation (thickness of test specimen: 3 mm, pin diameter: 0.5 mm, load: 10 g, and temperature increase rate: 10°/min), heat distortion temperature was measured.

(Striae)

The obtained plastic lens was observed with a naked eye according to Schlieren method, and striae of the plastic lens was evaluated based on the following three levels.

Those having no striae: VG (Very Good)
Those observed with slight striae: G (Good)
Those observed with many striae: B (Bad)

The plastic lens with evaluation result of VG or G has practically no problem in terms of striae. On the other hand, the plastic lens with the evaluation result of B is not suitable for practical use.

(Transparency)

The obtained plastic lens was observed with a naked eye under a fluorescent lamp in dark room, and transparency of the plastic lens was evaluated based on the following three levels.
Those having no cloudiness and no precipitation of opaque materials: VG (Very Good)
Those observed with slight cloudiness or precipitation of opaque materials, or both of them: G (Good)
Those observed with cloudiness at strong level or clear precipitation of opaque materials: B (Bad)
The plastic lens with evaluation result of VG or G has practically no problem in terms of transparency. On the other hand, the plastic lens with the evaluation result of B is not suitable for practical use.

(Optical distortion)

The obtained plastic lens was observed with a naked eye using a strain scope, and optical distortion of the plastic lens was evaluated based on the following three levels.

Those having no optical distortion: VG (Very Good)
Those observed with slight optical distortion: G (Good)
Those having a large amount of optical distortion: B (Bad)

The plastic lens with evaluation result of VG or G has practically no problem in terms of optical distortion. On the other hand, the plastic lens with the evaluation result of B is not suitable for practical use.

(Tensile strength)

By using a drill, a hole with 1.6 mm diameter was formed at 2 areas of a lens which has been adjusted to have 0.00 D, lens diameter of 50 mm, and thickness of 1.8 mm, and thus a sample was obtained. On Tensilon universal material tester manufactured by A&D Company, Limited (model number; RTC-1225A), both ends of the sample were fixed by using a pin with diameter of 1.6 mm. Then, elongation was made at rate of 0.05 mm/min, and the strength at break was measured.
The plastic lenses of the following Examples, Comparative Examples, and Reference Examples were produced as described below.

(Example 1)

A mixture which has been obtained by sufficient mixing by stirring at room temperature of 33.6 pbm of isophorone diisocyanate (hereinbelow, described as "IPDI"), 35.1 pbm of a mixture of 4, 8-, 4,7- and 5,7-bis(mercaptomethyl)-3,6,9-trithiaundecane-1,11-dithiol (" polythiol (B-1-1)"), 16.9 pbm of hexamethylene diisocyanate ("HDI"), 14.4 pbm of trimethylol propane tris(thioglycolate) ("TMTG"), 0.10 pbm of dimethyl tin dichloride, and 0.20 pbm of a mixture of butoxyethyl acid phosphate and dibutoxyethyl acid phosphate (manufactured by JOHOKU CHEMICAL CO., LTD. Productname: JP-506H) was degassed under reduced pressure of 667 Pa (5 mmHg) to prepare a homogeneously-prepared monomer mixture. The resulting monomer mixture was injected to a molding die which consists of a pair of glass molds and a gasket made of resin. Furthermore, as for the pair of glass molds, a pair with top mold curvature of 600 mm and bottom mold curvature of 120 mm was used, and thus the molding die was assembled such that the center thickness of a plastic lens becomes 5 mm and the diameter of a plastic lens becomes 75 mm.

After injecting the monomer mixture to the molding die, the temperature was raised from 20°C to 120°C over 15 hours followed by heat polymerization for 4 hours at 120°C. After cooling, by extracting the plastic lens from the molding die, the plastic lens of Example 1 was obtained.

(Example 2)

The plastic lens of Example 2 was produced by preparing a polymerizable composition in the same manner as Example 1 except that the blending amounts were modified to 43.6 pbm of IPDI, 34.2 pbm of the polythiol (B-1-1) , 8.2 pbm of HDI, and 14.0 pbm of TMTG.

(Example 3)

The plastic lens of Example 3 was produced by preparing a polymerizable composition in the same manner as Example 1 except that the blending amounts were modified to 34.2 pbm of IPDI, 42.4 pbm of the polythiol (B-1-1), 17.3 pbm of HDI, and 6.1 pbm of TMTG.

(Example 4)

The plastic lens of Example 4 was produced by preparing a polymerizable composition in the same manner as Example 1 except that the blending amounts were modified to 42.7 pbm of IPDI, 26.4 pbm of the polythiol (B-1-1), 8.1 pbm of HDI, and 22.8 pbm of TMTG.

(Example 5)

The plastic lens of Example 5 was produced by preparing a polymerizable composition in the same manner as Example 1 except that the blending amounts were modified to 35.8 pbm of IPDI, 36.4 pbm of the polythiol (B-1-1) and 14.6 pbm of HDI, and 13.2 pbm of trimethylol propane tris (3-mercaptopropionate) ("TMTP") was used instead of TMTG.

(Example 6)

The plastic lens of Example 6 was produced by preparing a polymerizable composition in the same manner as Example 1 except that the blending amounts were modified to 40.5 pbm of IPDI, 37.5 pbm of the polythiol (B-1-1) and 11.3 pbm of HDI, and 10.7 pbm of 1,4-butanediol bis (mercaptoacetate) ("BDTG") was used instead of TMTG.

(Example 7)

The plastic lens of Example 7 was produced by preparing a polymerizable composition in the same manner as Example 1 except that the blending amounts were modified to 33.3 pbm of IPDI, 36.6 pbm of the polythiol (B-1-1) and 16.8 pbm of HDI, and 13.3 pbm of 1,4-butanediol bis (mercaptopropionate) ("BDTP") was used instead of TMTG.

(Example 8)

The plastic lens of Example 8 was produced by preparing a polymerizable composition in the same manner as Example 1 except that the blending amounts were modified to 38.2 pbm of IPDI, 40.5 pbm of the polythiol (B-1-1) and 5.8 pbm of TMTG, and 15.5 pbm of trimethylhexamethylene diisocyanate ("TMDI") was used instead of HDI.

(Example 9)

The plastic lens of Example 9 was produced by preparing a polymerizable composition in the same manner as Example 1 except that the blending amounts were modified to 32.6 pbm of IPDI and 40.3 pbm of the polythiol (B-1-1), and 20.6 pbm of TMDI was used instead of HDI, and 6.5 pbm of TMTP was used instead of TMTG.

(Example 10)

The plastic lens of Example 10 was produced by preparing a polymerizable composition in the same manner as Example 1 except that the blending amounts were modified to 37.7 pbm of IPDI and 35.5 pbm of the polythiol (B-1-1), and 15.3 pbm of TMDI was used instead of HDI, and 11.5 pbm of BDTG was used instead of TMTG.

(Example 11)

The plastic lens of Example 11 was produced by preparing a polymerizable composition in the same manner as Example 1 except that the blending amounts were modified to 42.4 pbm of IPDI and 34.9 pbm of the polythiol (B-1-1), and 10.0 pbm of TMDI was used instead of HDI, and 12.7 pbm of BDTP was used instead of TMTG.

(Example 12)

The plastic lens of Example 12 was produced by preparing a polymerizable composition in the same manner as Example 1 except that 37.3 pbm of dicyclohexylmethane diisocyanate ("HMDI") was used instead of IPDI, and the blending amounts were modified to 32.6 pbm of the polythiol (B-1-1), 16.0 pbm of HDI and 14.1 pbm of TMTG.

(Example 13)

The plastic lens of Example 13 was produced by preparing a polymerizable composition in the same manner as Example 12 except that the blending amounts were modified to 47.8 pbm of HMDI, 35.5 pbm of the polythiol (B-1-1) and 7.7 pbm of HDI, and 9.1 pbm of TMTP was used instead of TMTG.

(Example 14)

The plastic lens of Example 14 was produced by preparing a polymerizable composition in the same manner as Example 12 except that the blending amounts were modified to 37.8 pbm of HMDI, 39.6 pbm of the polythiol (B-1-1) and 16.2 pbm of HDI, and 6.4 pbm of BDTP was used instead of TMTG.

(Example 15)

The plastic lens of Example 15 was produced by preparing a polymerizable composition in the same manner as Example 12 except that the blending amounts were modified to 36.3 pbm of HMDI and 38.1 pbm of the polythiol (B-1-1), and 19.4 pbm of TMDI was used instead of HDI, and 6.1 pbm of TMTP was used instead of TMTG.

(Example 16)

The plastic lens of Example 16 was produced by preparing a polymerizable composition in the same manner as Example 12 except that the blending amount s were modified to 42.2 pbm of HMDI and 37.9 pbm of the polythiol (B-1-1), and 14.5 pbm of TMDI was used instead of HDI, and 5.5 pbm of BDTG was used instead of TMTG.

(Example 17)

The plastic lens of Example 17 was produced by preparing a polymerizable composition in the same manner as Example 1 except that 42.9 pbm of bis (isocyanatemethyl) cyclohexane ("HXDI") was used instead of IPDI, the blending amounts were modified to 27.0 pbm of the polythiol (B-1-1), and 4.1 pbm of HDI , and 26.1 pbm of TMTP was used instead of TMTG.

(Example 18)

The plastic lens of Example 18 was produced by preparing a polymerizable composition in the same manner as Example 17 except that the blending amounts were modified to 42.9 pbm of HXDI, 38.1 pbm of the polythiol (B-1-1) and 6.6 pbm of HDI, and 12.4 pbm of BDTG was used instead of TMTP.

(Example 19)

The plastic lens of Example 19 was produced by preparing a polymerizable composition in the same manner as Example 17 except that the blending amounts were modified to 29.1 pbm of HXDI and 32.1 pbm of the polythiol (B-1-1), and 21.0 pbm of TMDI was used instead of HDI, and 17.8 pbm of TMTG was used instead of TMTP.

(Example 20)

The plastic lens of Example 20 was produced by preparing a polymerizable composition in the same manner as Example 17 except that the blending amounts were modified to 34.8 pbm of HXDI and 39.9 pbm of the polythiol (B-1-1), and 16.1 pbm of TMDI was used instead of HDI, and 9.2 pbm of BDTG was used instead of TMTP.

(Example 21)

The plastic lens of Example 21 was produced by preparing a polymerizable composition in the same manner as Example 1 except that 52.0 pbm of bis(isocyanatemethyl)bicyclo[2.2.1]heptane ("NBDI") was used instead of IPDI, and the blending amounts were modified to 28.5 pbm of the polythiol (B-1-1), 3.7 pbm of HDI and 15.8 pbm of TMTG.

(Example 22)

The plastic lens of Example 22 was produced by preparing a polymerizable composition in the same manner as Example 21 except that the blending amounts were modified to 52.3 pbm of NBDI, 30.7 pbm of the polythiol (B-1-1) and 3.8 pbm of HDI, and 13.3 pbm of BDTG was used instead of TMTG.

(Example 23)

The plastic lens of Example 23 was produced by preparing a polymerizable composition in the same manner as Example 21 except that the blending amounts were modified to 34.8 pbm of NBDI and 28.6 pbm of the polythiol (B-1-1), and 18.8 pbm of TMDI was used instead of HDI, and 17.8 pbm of TMTP was used instead of TMTG.

(Example 24)

The plastic lens of Example 24 was produced by preparing a polymerizable composition in the same manner as Example 21 except that the blending amounts were modified to 35.8 pbm of NBDI and 35.7 pbm of the polythiol (B-1-1), and 19.3 pbm of TMDI was used instead of HDI, and 9.2 pbm of BDTP was used instead of TMTG.

(Comparative Example 1)

The plastic lens of Comparative Example 1 was produced by preparing a polymerizable composition in the same manner as Example 12 except that the blending amounts were modified to 58.9 pbm of HMDI and 41.1 pbm of the polythiol (B-1-1), and HDI and TMTG were not used.

(Comparative Example 2)

The plastic lens of Comparative Example 2 was produced by preparing a polymerizable composition in the same manner as Example 12 except that the blending amounts were modified to 46.6 pbm of HMDI, 43.4 pbm of the polythiol (B-1-1) and 10.0 pbm of HDI, and TMTG was not used.

(Comparative Example 3)

The plastic lens of Comparative Example 3 was produced by preparing a polymerizable composition in the same manner as Example 12 except that the blending amounts were modified to 58.1 pbm of HMDI and 36.9 pbm of the polythiol (B-1-1), 4.9 pbm of pentaerythritol tetrakis (mercaptopropionate) ("PTMP") was used instead of TMTG, and HDI was not used.

(Comparative Example 4)

The plastic lens of Comparative Example 4 was produced by preparing a polymerizable composition in the same manner as Example 17 except that the blending amounts were modified to 51.4 pbm of HXDI and 48.6 pbm of the polythiol (B-1-1), and HDI and TMTG were not used.

(Comparative Example 5)

The plastic lens of Comparative Example 5 was produced by preparing a polymerizable composition in the same manner as Example 17 except that the blending amounts were modified to 44.3 pbm of HXDI, 49.6 pbm of the polythiol (B-1-1) and 13.6 pbm of HDI, and TMTP was not used.

(Comparative Example 6)

The plastic lens of Comparative Example 6 was produced by preparing a polymerizable composition in the same manner as Example 21 except that the blending amounts were modified to 58.7 pbm of NBDI and 41.3 pbm of the polythiol (B-1-1), and HDI and TMTG were not used.

(Comparative Example 7)

The plastic lens of Comparative Example 7 was produced by preparing a polymerizable composition in the same manner as Example 21 except that the blending amounts were modified to 36.9 pbm of NBDI and 43.3 pbm of the polythiol (B-1-1), 19.9 pbm of TMDI was used instead of HDI, and TMTG was not used.

(Comparative Example 8)

The plastic lens of Comparative Example 8 was produced by preparing a polymerizable composition in the same manner as Example 1 except that 50.7 pbm of xylylene diisocyanate ("XDI") was used instead of IPDI, the blending amount of the polythiol (B-1-1) was modified to 49.3 pbm, and HDI and TMTG were not used.

(Comparative Example 9)

The plastic lens of Comparative Example 9 was produced by preparing a polymerizable composition in the same manner as Comparative Example 8 except that the blending amounts were modified to 52.7 pbm of XDI and 44.3 pbm of the polythiol (B-1-1), and 2.6 pbm of thioglycerin ("TG") was used.

(Comparative Example 10)

The plastic lens of Comparative Example 10 was produced by preparing a polymerizable composition in the same manner as Comparative Example 8 except that the blending amounts were modified to 49.9 pbm of XDI and 38.9 pbm of the polythiol (B-1-1), and 11.3 pbm of dimercaptomethyldithiane ("DMMD") was used.

(Reference Example 1)

The plastic lens of Reference Example 1 was produced by preparing a polymerizable composition in the same manner as Example 1 except that the blending amounts were modified to 54.8 pbm of IPDI and 45.2 pbm of the polythiol (B-1-1), and HDI and TMTG were not used.

(Reference Example 2)

The plastic lens of Reference Example 2 was produced by preparing a polymerizable composition in the same manner as Example 1 except that the blending amounts were modified to 29.4 pbm of IPDI, 48.4 pbm of the polythiol (B-1-1) and 22.2 pbm of HDI, and TMTG was not used.

(Reference Example 3)

The plastic lens of Reference Example 3 was produced by preparing a polymerizable composition in the same manner as Example 1 except that the blending amounts were modified to 33.3 pbm of IPDI and 45.7 pbm of the polythiol (B-1-1), 21.0 pbm of TMDI was used instead of HDI, and TMTG was not used.

(Reference Example 4)

The plastic lens of Reference Example 4 was produced by preparing a polymerizable composition in the same manner as Example 1 except that the blending amounts were modified to 54.1 pbm of IPDI, 40.1 pbm of the polythiol (B-1-1) and 5.8 pbm of TMTG, and HDI was not used.

(Reference Example 5)

The plastic lens of Reference Example 5 was produced by preparing a polymerizable composition in the same manner as Example 1 except that the blending amounts were modified to 53.7 pbm of IPDI and 39.9 pbm of the polythiol (B-1-1), 6.4 pbm of TMTP was used instead of TMTG, and HDI was not used.

(Reference Example 6)

The plastic lens of Reference Example 6 was produced by preparing a polymerizable composition in the same manner as Example 1 except that the blending amounts were modified to 54.1 pbm of IPDI and 40.1 pbm of the polythiol (B-1-1), 5.8 pbm of BDTG was used instead of TMTG, and HDI was not used.

(Reference Example 7)

The plastic lens of Reference Example 7 was produced by preparing a polymerizable composition in the same manner as Example 1 except that the blending amounts were modified to 53.7 pbm of IPDI and 39.9 pbm of the polythiol (B-1-1), 6.4 pbm of BDTP was used instead of TMTG, and HDI was not used.

(Reference Example 8)

The plastic lens of Reference Example 8 was produced by preparing a polymerizable composition in the same manner as Example 12 except that the blending amounts were modified to 53.1 pbm of HMDI and 41.3 pbm of the polythiol (B-1-1), 5.6 pbm of hexylisocyanate ("HI") was used instead of HDI, and TMTG was not used.

Compounds and blending amounts of the alicyclic polyisocyanate (A-1), the non-cyclic aliphatic polyisocyanate (A-2), the polyisocyanate (A-3) other than the alicyclic polyisocyanate (A-1) and the non-cyclic aliphatic polyisocyanate (A-2), the polythiol (B-1), the polythiol (B-2), and the polythiol (B-3) other than the polythiol (B-1) and the polythiol (B-2), which are present in the polymerizable composition used for producing the plastic lenses of Examples, Comparative Examples, and Reference Examples, are shown in the following Table 1 and Table 2.

[Table 1]

| Table 1 Polyisocyanate and polythiol of Examples (Ex) | | | | | | |
|---|---|---|---|---|---|---|
| | Polyisocyanate (Compound (pbm)) | | | Polythiol (Compound (pbm)) | | |
| | A-1 | A-2 | A-3 | B-1 | B-2 | B-3 |
| Ex-1 | IPDI (33.6) | HDI (16.9) | - | (B-1-1) (35.1) | TMTG (14.4) | - |
| Ex-2 | IPDI (43.6) | HDI (8.2) | - | (B-1-1) (34.2) | TMTG (14.0) | - |
| Ex-3 | IPDI (34.2) | HDI (17.3) | - | (B-1-1) (42.4) | TMTG (6.1) | - |
| Ex-4 | IPDI (42.7) | HDI (8.1) | - | (B-1-1) (26.4) | TMTG (22.8) | - |
| Ex-5 | IPDI (35.8) | HDI (14.6) | - | (B-1-1) (36.4) | TMTP (13.2) | - |
| Ex-6 | IPDI (40.5) | HDI (11.3) | - | (B-1-1) (37.5) | BDTG (10.7) | - |
| Ex-7 | IPDI (33.3) | HDI (16.8) | - | (B-1-1) (36.6) | BDTP (13.3) | - |
| Ex-8 | IPDI (38.2) | TMDI (15.5) | - | (B-1-1) (40.5) | TMTG (5.8) | - |
| Ex-9 | IPDI (32.6 | TMDI (20.6) | - | (B-1-1) (40.3) | TMTP (6.5) | - |
| Ex-10 | IPDI (37.7) | TMDI (15.3) | - | (B-1-1) (35.5) | BDTG (11.5) | - |
| Ex-11 | IPDI (42.4) | TMDI (10.0) | - | (B-1-1) (34.9) | BDTP (12.7) | - |
| Ex-12 | HMDI (37.3) | HDI (16.0) | - | (B-1-1) (32.6) | TMTG (14.1) | - |
| Ex-13 | HMDI (47.8) | HDI (7.7) | - | (B-1-1) (35.5) | TMTP (9.1) | - |
| Ex-14 | HMDI (37.8) | HDI (16.2) | - | (B-1-1) (39.6) | BDTP (6.4) | - |
| Ex-15 | HMDI (36.3) | TMDI (19.4) | - | (B-1-1) (38.1) | TMTP (6.1) | - |
| Ex-16 | HMDI (42.2) | TMDI (14.5) | - | (B-1-1) (37.9) | BDTG (5.5) | - |
| Ex-17 | HXDI 42.9 | HDI 4.1 | - | (B-1-1) 27.0) | TMTP (26.1) | - |

(continued)

| Table 1 Polyisocyanate and polythiol of Examples (Ex) | | | | | | |
|---|---|---|---|---|---|---|
| | Polyisocyanate (Compound (pbm)) | | | Polythiol (Compound (pbm)) | | |
| | A-1 | A-2 | A-3 | B-1 | B-2 | B-3 |
| Ex-18 | HXDI 42.9 | HDI 6.6 | - | (B-1-1) 38.1) | BDTG (12.4) | - |
| Ex-19 | HXDI 29.1 | TMDI 21.0 | - | (B-1-1) 32.1) | TMTG (17.8) | - |
| Ex-20 | HXDI 34.8 | TMDI 16.1 | - | (B-1-1) 39.9) | BDTG (9.2) | - |
| Ex-21 | NBDI 52.0 | HDI 3.7 | - | (B-1-1) 28.5) | TMTG (15.8) | - |
| Ex-22 | NBDI 52.3 | HDI 3.8 | - | (B-1-1) 30.7) | BDTG (13.3) | - |
| Ex-23 | NBDI 34.8 | TMDI 18.8 | - | (B-1-1) 28.6) | TMTP (17.8) | - |
| Ex-24 | NBDI 35.8 | TMDI 19.3 | - | (B-1-1) 35.7) | BDTP (9.2) | - |

[Table 2]

| Table 2 Polyisocyanate and polythiol of Comparative Examples (CE) and Reference Examples (RE) | | | | | | |
|---|---|---|---|---|---|---|
| | Polyisocyanate (Compound (pbm)) | | | Polythiol (Compound (pbm)) | | |
| | A-1 | A-2 | A-3 | B-1 | B-2 | B-3 |
| CE-1 | HMDI (58.9) | - | - | (B-1-1) (41.1) | - | - |
| CE-2 | HMDI (46.6) | HDI (10.0) | - | (B-1-1) (43.4) | - | - |
| CE-3 | HMDI (58.1) | - | | (B-1-1) (36.9) | - | PTMP (4.9) |
| CE-4 | HXDI (51.4) | - | - | (B-1-1) (48.6) | - | - |
| CE-5 | HXDI (36.8) | HDI (13.6) | - | (B-1-1) (49.6) | - | - |
| CE-6 | NBDI (58.7) | - | - | (B-1-1) (41.3) | - | - |
| CE-7 | NBDI (36.9) | TMDI (19.9) | - | (B-1-1) 43.3 | - | - |
| CE-8 | - | - | XDI (50.7) | (B-1-1) (49.3) | - | - |
| CE-9 | - | - | XDI (52.7) | (B-1-1) (44.3) | - | TG (2.6) |
| CE-10 | - | - | XDI (49.9) | (B-1-1) (38.9) | - | DMMD (11.3) |
| RE-1 | IPDI (54.8) | - | - | (B-1-1) (45.2) | - | - |
| RE-2 | IPDI (29.4) | HDI (22.2) | - | (B-1-1) (48.4) | | |
| RE-3 | IPDI (33.3) | TMDI (21.0) | - | (B-1-1) (45.7) | - | - |
| RE-4 | IPDI (54.1) | - | - | (B-1-1) (40.1) | TMTG (5.8) | - |
| RE-5 | IPDI (53.7) | - | - | (B-1-1) (39.9) | TMTP (6.4) | - |
| RE-6 | IPDI (54.1) | - | - | (B-1-1) (40.1) | BDTG (5.8) | - |
| RE-7 | IPDI (53.7) | - | - | (B-1-1) (39.9) | BDTP (6.4) | - |
| RE-8 | HMDI (53.1) | - | HI (5.6) | (B-1-1) (41.3) | - | - |

(Results)

The results of evaluating the plastic lenses of Examples, Comparative Examples, and Reference Examples in terms of Abbe number, heat resistance, striae, transparency, optical distortion, and tensile strength are shown in the following Tables 3 and 4.

[Table 3]

| Table 3 Evaluation results of plastic lenses of Examples (Ex) | | | | | | | |
|---|---|---|---|---|---|---|---|
| | Refractive index $n_e$ | Abbe number $\nu_e$ | Heat resistance °C | Striae | Transparency | Optical distortion | Tensile strength kgf |
| Ex-1 | 1.60 | 40 | 116 | VG | VG | VG | 62 |
| Ex-2 | 1.59 | 40 | 122 | VG | VG | VG | 54 |
| Ex-3 | 1.60 | 39 | 114 | VG | VG | VG | 52 |
| Ex-4 | 1.58 | 41 | 114 | VG | VG | VG | 60 |
| Ex-5 | 1.59 | 40 | 112 | VG | VG | VG | 59 |
| Ex-6 | 1.60 | 39 | 118 | VG | VG | VG | 63 |
| Ex-7 | 1.60 | 40 | 99 | VG | VG | VG | 63 |
| Ex-8 | 1.60 | 40 | 120 | VG | VG | VG | 61 |
| Ex-9 | 1.60 | 40 | 112 | VG | VG | VG | 50 |
| Ex-10 | 1.59 | 40 | 105 | VG | VG | VG | 49 |
| Ex-11 | 1.59 | 40 | 110 | G | VG | VG | 49 |
| Ex-12 | 1.60 | 40 | 87 | G | VG | VG | 64 |
| Ex-13 | 1.60 | 41 | 121 | VG | VG | VG | 59 |
| Ex-14 | 1.60 | 40 | 104 | VG | VG | VG | 63 |
| Ex-15 | 1.60 | 40 | 113 | VG | VG | VG | 62 |
| Ex-16 | 1.60 | 40 | 104 | VG | VG | VG | 61 |
| Ex-17 | 1.59 | 41 | 99 | VG | VG | VG | 63 |
| Ex-18 | 1.61 | 39 | 97 | VG | VG | VG | 60 |
| Ex-19 | 1.59 | 40 | 92 | G | VG | VG | 49 |
| Ex-20 | 1.61 | 39 | 92 | VG | VG | VG | 53 |
| Ex-21 | 1.60 | 41 | 98 | VG | VG | VG | 61 |
| Ex-22 | 1.60 | 40 | 82 | VG | VG | VG | 63 |
| Ex-23 | 1.59 | 41 | 88 | G | VG | VG | 46 |
| Ex-24 | 1.59 | 41 | 105 | VG | VG | VG | 45 |

[Table 4]

| Table 4 Evaluation results of plastic lenses of Comparative Examples (CE) and Reference Examples (RE) | | | | | | | |
|---|---|---|---|---|---|---|---|
| | Refractive index $n_e$ | Abbe number $\nu_e$ | Heat resistance °C | Striae | Transparency | Optical distortion | Tensile strength kgf |
| CE-1 | 1.60 | 41 | 136 | B | VG | G | 50 |
| CE-2 | 1.61 | 40 | 120 | B | VG | G | 54 |
| CE-3 | 1.60 | 41 | 128 | B | VG | B | 63 |
| CE-4 | 1.62 | 38 | 120 | B | VG | VG | 66 |
| CE-5 | 1.62 | 37 | 108 | B | VG | G | 32 |
| CE-6 | 1.62 | 40 | 104 | B | G | B | 66 |
| CE-7 | 1.61 | 39 | 102 | B | VG | B | 46 |
| CE-8 | 1.67 | 32 | 109 | B | VG | G | 65 |
| CE-9 | 1.66 | 32 | 110 | B | VG | G | 76 |

(continued)

| Table 4 Evaluation results of plastic lenses of Comparative Examples (CE) and Reference Examples (RE) | | | | | | | |
|---|---|---|---|---|---|---|---|
| | Refractive index $n_e$ | Abbe number $\nu_e$ | Heat resistance °C | Striae | Transparency | Optical distortion | Tensile strength kgf |
| CE-10 | 1.67 | 32 | 107 | B | VG | B | 73 |
| RE-1 | 1.60 | 39 | 152 | G | VG | VG | 13 |
| RE-2 | 1.61 | 38 | 111 | G | VG | G | 20 |
| RE-3 | 1.60 | 39 | 119 | G | VG | G | 15 |
| RE-4 | 1.59 | 40 | 137 | G | VG | G | 20 |
| RE-5 | 1.60 | 40 | 139 | G | VG | G | 21 |
| RE-6 | 1.60 | 40 | 132 | G | VG | G | 19 |
| RE-7 | 1.59 | 40 | 131 | G | VG | G | 15 |
| RE-8 | 1.60 | 41 | 105 | G | VG | G | 19 |

The plastic lenses of Examples 1-24 were satisfactory in terms of the item for evaluating the striae. They are also satisfactory in terms of the item for evaluating the refractive index, Abbe number, transparency, and optical distortion. On the other hand, the plastic lenses of Comparative Examples 1-10 were not satisfactory in terms of the item for evaluating the striae. Based on this, it was possible to confirm that, by using a polymerizable composition containing an isocyanate component which contains the alicyclic polyisocyanate (A-1) and the non-cyclic aliphatic polyisocyanate (A-2) and a polythiol component which contains the polythiol (B-1) and the polythiol (B-2), a plastic lens with reduced striae can be obtained.

The plastic lenses of Reference Examples 1-7 were satisfactory in terms of the item for evaluating the striae. However, the evaluation item relating to tensile strength was significantly poorer compared to the plastic lenses of Examples 1-24. Based on this, it was possible to confirm that, when the alicyclic polyisocyanate (A-1) and the polythiol (B-1) are used and also any one of the non-cyclic aliphatic polyisocyanate (A-2) and the polythiol (B-2) is used, a plastic lens with reduced striae can be produced but the tensile strength of the lens becomes very low.

The plastic lens of Reference Example 8 was satisfactory in terms of the item for evaluating the striae. However, the evaluation item relating to tensile strength was significantly poorer compared to the plastic lenses of Examples 1-24. Based on this, it was possible to confirm that, when a polymerizable composition containing the alicyclic polyisocyanate (A-1), the polythiol (B-1), and hexyl isocyanate (HI) is used, a plastic lens with reduced striae can be produced but the tensile strength of the lens becomes very low.

**Claims**

1.  A polymerizable composition comprising an isocyanate component comprising alicyclic polyisocyanate (A-1)and non-cyclic aliphatic polyisocyanate (A-2) ; and a polythiol component comprising polythiol (B-1) and polythiol (B-2); wherein

    - the alicyclic polyisocyanate (A-1) is at least one of isophorone diisocyanate, methylene biscyclohexyl diisocyanate, bis(isocyanatemethyl)cyclohexane, and bis(isocyanatemethyl)bicyclo[2.2.1]heptane,
    - the non-cyclic aliphatic polyisocyanate (A-2) is at least one of hexamethylene diisocyanate and trimethylhexamethylene diisocyanate,
    - the polythiol (B-1) is at least one of 4,8-, 4,7- and 5,7-bis(mercaptomethyl)-3,6,9-trithiaundecane-1,11-dithiol, and,
    - the polythiol (B-2) is at least one of trimethylol propane tris(thioglycolate), trimethylol propane tris(3-mercaptopropionate), 1,4-butanediol bis(thioglycolate), and 1,4-butanediol bis(3-mercaptopropionate).

2.  The polymerizable composition of claim 1, wherein the polythiol (B-2) has three mercapto groups.

3.  The polymerizable composition of claim 1 or2, wherein the ratio of the total of the polyisocyanates (A-1) and (A-2) is $\geq$ 80 mass-% relative to the total mass of the isocyanate component.

4. The polymerizable composition of any of claims 1-3, wherein the molar ratio [(A-1)/(A-2)] of the polyisocyanates (A-1) and (A-2) is 95/5 to 50/50.

5. The polymerizable composition of any of claims 1-4, wherein the ratio of the total of the polythiols (B-1) and (B-2) is ≥ 70 mass-% relative to the total mass of the polythiol component.

6. The polymerizable composition of any of claims 1-5, wherein the molar ratio [(B-1)/(B-2)] of the polythiol (B-1) and (B-2) is 90/10 to 50/50.

7. An optical component obtained by polymerizing the polymerizable composition of any of claims 1-6.

8. A plastic lens comprising the optical component of claim 7.

9. A spectacle lens comprising a lens substrate which comprises the optical component of claim 7.

**Patentansprüche**

1. Polymerisierbare Zusammensetzung, umfassend eine Isocyanatkomponente, umfassend ein alicyclisches Polyisocyanat (A-1) und ein nicht-cyclisches aliphatisches Polyisocyanat (A-2); und eine Polythiolkomponente, umfassend Polythiol (B-1) und Polythiol (B-2); wobei

   - das alicyclische Polyisocyanat (A-1) mindestens eines von Isophorondiisocyanat, Methylenbiscyclohexyldiisocyanat, Bis(isocyanatmethyl)cyclohexan und Bis(isocyanatmethyl)bicyclo[2.2.1]heptan ist,
   - das nicht-cyclische aliphatische Polyisocyanat (A-2) mindestens eines von Hexamethylendiisocyanat und Trimethylhexamethylendiisocyanat ist,
   - das Polythiol (B-1) mindestens eines von 4,8-, 4,7- und 5,7-Bis(mercaptomethyl)-3,6,9-trithiaundecan-1,11-dithiol ist, und,
   - das Polythiol (B-2) mindestens eines von Trimethylolpropantris(thioglycolat), Trimethylolpropantris(3-mercaptopropionat), 1,4-Butandiol-bis(thioglycolat) und 1,4-Butandiol-bis(3-mercaptopropionat) ist.

2. Polymerisierbare Zusammensetzung gemäß Anspruch 1, wobei das Polythiol (B-2) drei Mercaptogruppen aufweist.

3. Polymerisierbare Zusammensetzung gemäß Anspruch 1 oder 2, wobei das Verhältnis der Gesamtmenge an Polyisocyanaten (A-1) und (A-2) ≥ 80 Massen-%, bezogen auf die Gesamtmasse der Isocyanatkomponente, beträgt.

4. Polymerisierbare Zusammensetzung gemäß mindestens einem der Ansprüche 1 bis 3, wobei das molare Verhältnis [(A-1)/(A-2)] der Polyisocyanate (A-1) und (A-2) 95/5 bis 50/50 beträgt.

5. Polymerisierbare Zusammensetzung gemäß mindestens einem der Ansprüche 1 bis 4, wobei das Verhältnis der Gesamtmenge an Polythiolen (B-1) und (B-2) ≥ 70 Massen-%, bezogen auf die Gesamtmasse der Polythiolkomponente, beträgt.

6. Polymerisierbare Zusammensetzung gemäß mindestens einem der Ansprüche 1 bis 5, wobei das molare Verhältnis [(B-1)/(B-2)] der Polythiole (B-1) und (B-2) 90/10 bis 50/50 beträgt.

7. Optische Komponente, erhalten durch Polymerisation der polymerisierbaren Zusammensetzung gemäß mindestens einem der Ansprüche 1 bis 6.

8. Kunststofflinse, umfassend die optische Komponente gemäß Anspruch 7.

9. Brillenglas, umfassend ein Linsensubstrat, das die optische Komponente gemäß Anspruch 7 umfasst.

**Revendications**

1. Composition polymérisable comprenant un composant isocyanate comprenant un polyisocyanate alicyclique (A-1) et un polyisocyanate aliphatique non cyclique (A-2) ; et un composant polythiol comprenant un polythiol (B-1) et un polythiol (B-2) ; dans laquelle

- le polyisocyanate alicyclique (A-1) est au moins un de diisocyanate d'isophorone, biscyclohexyle de diisocyanate de méthylène, bis(isocyanatéméthyl)cyclohexane, et bis(isocyanatéméthyl)bicyclo[2.2.1]heptane,
- le polyisocyanate aliphatique non cyclique (A-2) est au moins un de diisocyanate d'hexaméthylène et diisocyanate de triméthylhexaméthylène,
- le polythiol (B-1) est au moins un de 4,8-, 4,7- et 5,7-bis(mercaptométhyl)-3,6,9-trithiaundécane-1,11-dithiol, et,
- le polythiol (B-2) est au moins un de tris(thioglycolate) de triméthylolpropane, tris(3-mercaptopropionate) de triméthylolpropane, 1,4-butanediol
- bis(thioglycolate), et 1,4-butanediol bis(3-mercaptopropionate).

2. Composition polymérisable selon la revendication 1, dans laquelle le polythiol (B-2) comprend trois groupes mercapto.

3. Composition polymérisable selon la revendication 1 ou la revendication 2, dans laquelle le rapport du total des polyisocyanates (A-1) et (A-2) est ≥ 80 % en masse par rapport à la masse totale du composant isocyanate.

4. Composition polymérisable selon l'une quelconque des revendications 1 à 3, dans laquelle le rapport molaire [(A-1)/(A-2)] des polyisocyanates (A-1) et (A-2) est 95/5 à 50/50.

5. Composition polymérisable selon l'une quelconque des revendications 1 à 4, dans laquelle le rapport du total des polythiols (B-1) et (B-2) est ≥ 70 % en masse par rapport à la masse totale du composant polythiol.

6. Composition polymérisable selon l'une quelconque des revendications 1 à 5, dans laquelle le rapport molaire [(B-1)/(B-2)] des polythiols (B-1) et (B-2) est 90/10 à 50/50.

7. Composant optique obtenu par polymérisation de la composition polymérisable selon l'une quelconque des revendications 1 à 6.

8. Lentille en plastique comprenant le composant optique selon la revendication 7.

9. Verre de lunettes comprenant un substrat de verre qui comprend le composant optique selon la revendication 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7252207 A
- EP 3178859 A
- WO 2016021680 A
- EP 3081965 A
- WO 2015088015 A
- JP 2008255221 A
- US 2014327869 A